(19) Europäisches Patentamt
European Patent Office
Office européen des brevets

(11) EP 4 450 573 B1

(12) **EUROPEAN PATENT SPECIFICATION**

(45) Date of publication and mention of the grant of the patent:
**25.02.2026 Bulletin 2026/09**

(21) Application number: **24170629.0**

(22) Date of filing: **16.04.2024**

(51) International Patent Classification (IPC):
***C09D 11/54*** *(2014.01)* ***C09D 11/40*** *(2014.01)*
***C09D 11/106*** *(2014.01)* ***C09D 11/107*** *(2014.01)*
***C09D 11/322*** *(2014.01)* ***C09D 11/38*** *(2014.01)*
***C09D 11/102*** *(2014.01)* ***D06P 5/30*** *(2006.01)*

(52) Cooperative Patent Classification (CPC):
**C09D 11/322; C09D 11/102; C09D 11/106; C09D 11/107; C09D 11/38; C09D 11/40; C09D 11/54; D06P 5/30**

(54) **INK SET FOR INKJET TEXTILE PRINTING, IMAGE FORMING METHOD, AND IMAGE-FORMED PRODUCT**

TINTENSATZ FÜR TINTENSTRAHLTEXTILDRUCK, BILDERZEUGUNGSVERFAHREN UND BILDERZEUGUNGSPRODUKT

ENSEMBLE D'ENCRES POUR IMPRESSION TEXTILE À JET D'ENCRE, PROCÉDÉ DE FORMATION D'IMAGE ET PRODUIT FORMÉ PAR IMAGE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **20.04.2023 JP 2023069162**

(43) Date of publication of application:
**23.10.2024 Bulletin 2024/43**

(73) Proprietor: **KONICA MINOLTA, INC.**
**Tokyo 100-7015 (JP)**

(72) Inventors:
- **KAWABE, Satomi**
  **Tokyo, 100-7015 (JP)**
- **KOBAYASHI, Fumiaki**
  **Tokyo, 100-7015 (JP)**
- **FUKUDA, Kazuhiro**
  **Tokyo, 100-7015 (JP)**

(74) Representative: **MFG Patentanwälte**
**Meyer-Wildhagen Meggle-Freund**
**Gerhard PartG mbB**
**Amalienstraße 62**
**80799 München (DE)**

(56) References cited:
**EP-A2- 3 981 909** **JP-A- 2009 298 842**
**US-A1- 2013 016 156** **US-A1- 2020 172 754**
**US-A1- 2021 363 691** **US-A1- 2023 086 133**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 450 573 B1

## Description

## Cross Reference to Related Applications

The entire disclosure of Japanese Patent Application No.2023 -69162, filed on April 20, 2023 is incorporated herein by reference in its entirety.

## Background

### Technological Field

The present invention relates to an ink set for inkjet textile printing, an image forming method, and an image-formed product.

### Description of Related Art

Inkjet textile printing, in which an image is formed on a fabric by an inkjet method, has been widely performed in recent years as a textile printing method because dyeing can be performed in a short time and production efficiency is high.

Known pigment-based inks for use in inkjet textile printing include inks containing a pigment and a pigment-dispersing agent, and inks containing a self-dispersible pigment. In addition, from the viewpoint of facilitating the aggregation of the pigment contained in the pigment-based ink, suppressing the bleeding of the pigment-based ink, enhancing the fixability, and the like, it has been studied to perform a pretreatment of applying an aggregating agent for aggregating the pigment dispersion to the fabric.

For example, Patent Literature (herein referred to as "PTL") 1 discloses a method for forming an image by applying a pretreatment liquid to a fabric to pretreat the fabric and then applying an inkjet ink to the fabric. The pretreatment liquid contains a thermoplastic resin, a cationic surfactant, and water, and the ink contains a pigment, an anionic dispersant, a water-soluble organic solvent, and water. In the examples of PTL 1, a styrene-acrylic acid copolymer (random copolymer) is used as a pigment-dispersing agent.

As a pigment-based ink set for use in image formation on plain paper or the like other than fabrics, PTL 2 discloses an ink set including an ink containing carbon black and a dispersion resin, and a reaction liquid containing a reactive substance. In the examples of PTL 2, a three block copolymer including a hydrophobic block segment A, a nonionic hydrophilic block segment B, and an ionic hydrophilic block segment C in this order is used as the dispersing resin.

Furthermore, PTL 3 discloses an ink set including an ink containing carbon black dispersed with a polymer dispersant, and a reaction liquid containing an inorganic salt and a polyamine that react with the ink. As a polymer dispersant, a block copolymer including an A block composed of 2 to 8 units of methacrylic acid or a salt thereof, and a B block including at least 2 units of methacrylic acid or a salt thereof and at least 16 units of benzyl methacrylate is used.

In each of the PTLs, a carbon black dispersion contained in an ink is aggregated by a reactive substance (aggregating agent) contained in a reaction liquid to improve the fixability of a pigment and the image density. Additionally, US2021363691 might be cited as prior art.

Citation List

Patent Literature

PTL 1
Japanese Patent Application Laid-Open No. 2008-231617
PTL 2
Japanese Patent Application Laid-Open No. 2009-298842
PTL 3
Japanese Patent Application Laid-Open No. 2010-513672

Summary of Invention

Solution to Problem

In the above-described PTLs 2 and 3, a reaction between a hydrophilic moiety of a pigment-dispersing agent and

an aggregating agent is used for aggregating a pigment. The pigment-dispersing agents used in PTLs 2 and 3 each have a block containing a hydrophilic moiety at only one location at the end of the molecular thereof. However, when a pigment-based ink using such a pigment-dispersing agent is applied to a fabric, the adhesion of an ink coating film to the fabric may become insufficient, or the fabric tends to become hard. Thus, there has been a problem such that the abrasion resistance (washing fastness) or friction fastness of an image-formed product during washing tends to decrease. Furthermore, there have been problems in that the pigment tends to aggregate due to interaction between the pigment-dispersing agents, and ejection stability tends to be impaired during the ejection of the ink by an inkjet method.

The present invention has been made in view of such circumstances, and an object of the present invention is to provide an ink set for inkjet textile printing, an image forming method, and an image-formed product, which are capable of forming an image having high washing fastness and friction fastness while having satisfactory ejection stability.

## Summary

The above problems can be solved by the following configurations.

[1] An ink set for inkjet textile printing, comprising: an ink and a pretreatment liquid, wherein the pretreatment liquid contains an aggregating agent, the ink contains a pigment, a block copolymer, and an aqueous solvent, and the block copolymer contains two hydrophilic blocks A respectively disposed at both ends of a molecule of the block copolymer and a hydrophobic block B disposed between the two hydrophilic blocks A, the two hydrophilic blocks A interacting or reacting with the aggregating agent.

[2] The ink set for inkjet textile printing according to [1], wherein the block copolymer is an ABA-type block copolymer composed of the two hydrophilic blocks A and the hydrophobic block B that is one hydrophobic block B.

[3] The ink set for inkjet textile printing according to [1] or [2], wherein the two hydrophilic blocks A have monomer compositions identical to each other.

[4] The ink set for inkjet textile printing according to any one of [1] to [3], wherein the hydrophilic block A contains a constituent unit derived from a hydrophilic monomer composed of a vinyl-based monomer containing a hydrophilic functional group selected from the group consisting of a hydroxyl group, a carboxyl group, and a sulfonic acid group; and a content ratio of the constituent unit derived from the hydrophilic monomer in the hydrophilic block A is higher than a content ratio of a constituent unit derived from a hydrophilic monomer in the hydrophobic block B.

[5] The ink set for inkjet textile printing according to [4], wherein the hydrophobic block B contains a constituent unit derived from a hydrophobic monomer composed of a vinyl-based monomer containing an aromatic ring group or an alicyclic hydrocarbon group; and a content ratio of the constituent unit derived from the hydrophilic monomer in the hydrophobic block B is less than that of the hydrophilic block A.

[6] The ink set for inkjet textile printing according to any one of [1] to [5], wherein the aggregating agent contains a polyvalent metal salt, an organic acid, or a compound having a cationic group.

[7] The ink set for inkjet textile printing according to [6], wherein the aggregating agent comprises a compound having a cationic group.

[8] The ink set for inkjet textile printing according to [7], wherein the compound having a cationic group is a cationic resin.

[9] The ink set for inkjet textile printing according to any one of [1] to [8], wherein the ink further contains a water-dispersible resin different from the block copolymer.

[10] The ink set for inkjet textile printing according to [9], wherein the water-dispersible resin is a urethane resin.

[11] An image forming method comprising: applying, by an inkjet method, an ink onto a fabric to which an aggregating agent adheres, wherein the ink contains a pigment, a block copolymer, and an aqueous solvent, and the block copolymer contains two hydrophilic blocks A respectively disposed at both ends of a molecule of the block copolymer and a hydrophobic block B disposed between the two hydrophilic blocks A, the two hydrophilic blocks A interacting or reacting with the aggregating agent.

[12] An image-formed product comprising: a fabric to which an aggregating agent adheres, and an image layer disposed on the fabric, wherein the image layer contains a pigment and a block copolymer that interacts or reacts with the aggregating agent, and the block copolymer contains two hydrophilic blocks A respectively disposed at both ends of a molecule of the block copolymer and a hydrophobic block B disposed between the two hydrophilic blocks A, the two hydrophilic blocks A interacting or reacting with the aggregating agent.

Advantageous Effects of Invention

According to the present invention, it is possible to provide an ink set for inkjet textile printing, an image forming method, and an image-formed product each capable of forming an image having high washing fastness and friction fastness while having satisfactory ejection stability.

## Detailed Description of Embodiments

Hereinafter, one or more embodiments of the present invention will be described. However, the scope of the invention is not limited to the disclosed embodiments.

1. Ink Set

1-1. Ink

The ink according to the present embodiment contains a pigment, a block copolymer, and an aqueous solvent.

1-1-1. Pigment

The pigment contained in the ink is not particularly limited, but is preferably, for example, an organic pigment or an inorganic pigment having one of the following numbers described in the Color Index.

Examples of orange pigments include Pigment Orange31 and 43.

Examples of red or magenta pigments include Pigment Red 3, 5, 19, 22, 31, 38, 43, 48:1, 48:2, 48:3, 48:4, 48:5, 49:1, 53:1, 57:1, 57:2, 58:4, 63:1, 81, 81:1, 81:2, 81:3, 81:4, 88, 104, 108, 112, 122, 123, 144, 146, 149, 166, 168, 169, 170, 177, 178, 179, 184, 185, 208, 216, 226, and 257, Pigment Violet 3, 19, 23, 29, 30, 37, 50, and 88, and Pigment Orange 13, 16, 20, and 36.

Examples of blue or cyan pigments include Pigment Blue 1, 15, 15:1, 15:2, 15:3, 15:4, 15:6, 16, 17-1, 22, 27, 28, 29, 36, and 60.

Examples of green or yellow pigments include Pigment Green 7, 26, 36, and 50. Examples of yellow pigments include Pigment Yellow 1, 3, 12, 13, 14, 15, 17, 34, 35, 37, 55, 74, 81, 83, 93, 94, 95, 97, 108, 109, 110, 128, 137, 138, 139, 151, 153, 154, 155, 157, 166, 167, 168, 180, 185, 193, and 213.

Examples of the black pigment include Pigment Black 7, 28, and 26.

Commercially available examples of pigments include Chromofine Yellow 2080, 5900, 5930, AF-1300, 2700L, Chromofine Orange 3700L, 6730, Chromofine Scarlet 6750, Chromofine Magenta 6880, 6886, 6891N, 6790, 6887, Chromofine Violet RE, Chromofine Red 6820, 6830, Chromofine Blue HS-3, 5187, 5108, 5197, 5085N, SR-5020, 5026, 5050, 4920, 4927, 4937, 4824, 4933GN-EP, 4940, 4973, 5205, 5208, 5214, 5221, 5000P, Chromofine Green 2GN, 2GO, 2G-550D, 5310, 5370, 6830, Chromofine Black A-1103, Seikafast Yellow 10GH, A-3, 2035, 2054, 2200, 2270, 2300, 2400 (B), 2500, 2600, ZAY-260, 2700 (B), 2770, Seikafast Red 8040, C405 (F), CA120, LR-116, 1531B, 8060R, 1547, ZAW-262, 1537B, GY, 4R-4016, 3820, 3891, ZA-215, Seikafast Carmine 6B1476T-7, 1483LT, 3840, 3870, Seikafast Bordeaux 10B-430, Seikafast Light Rose R40, Seikafast Light Violet B800, 7805, Seikafast Maroon 460N, Seikafast Orange 900, 2900, Seikalight Blue C718, A612, Cyanine Blue 4993M, 4993GN-EP, 4940, 4973 (manufactured by Dainichiseika Color & Chemicals Mfg. Co., Ltd.); KET Yellow 401, 402, 403, 404, 405, 406, 416, 424, KET Orange 501, KET Red 301, 302, 303, 304, 305, 306, 307, 308, 309, 310, 336, 337, 338, 346, KET Blue 101, 102, 103, 104, 105, 106, 111, 118, 124, KET Green 201 (manufactured by Dainippon Ink and Chemicals, Inc); Colortex Yellow 301, 314, 315, 316, P-624, 314, U10GN, U3GN, UNN, UA-414, U263, Finecol Yellow T-13, T-05, Pigment Yellow 1705, Colortex Orange 202, Colortex Red 101, 103, 115, 116, D3B, P-625, 102, H-1024, 105C, UFN, UCN, UBN, U3BN, URN, UGN, UG276, U456, U457, 105C, USN, Colortex Maroon 601, Colortex Brown B610N, Colortex Violet 600, Pigment Red 122, Colortex Blue 516, 517, 518, 519, A818, P-908, 510, Colortex Green 402, 403, Colortex Black 702, U905 (manufactured by Sanyo Pigment Co., Ltd); Lionol Yellow 1405G, Lionol Blue FG7330, FG7350, FG7400G, FG7405G, ES, ESP-S (manufactured by Toyo Ink Co., Ltd), Toner Magenta E02, Permanent Rubin F6B, Toner Yellow HG, Permanent Yellow GG-02, Hostapeam Blue B2G (manufactured by Hoechst Industries); Novoperm P-HG, Hostaperm Pink E, Hostaperm Blue B2G (manufactured by Clariant); and carbon black #2600, #2400, #2350, #2200, #1000, #990, #980, #970, #960, #950, #850, MCF88, #750, #650, MA600, MA7, MA8, MA11, MA100, MA100R, MA77, #52, #50, #47, #45, #45L, #40, #33, #32, #30, #25, #20, #10, #5, #44, CF9 (manufactured by Mitsubishi Chemical Corporation).

The pigment is preferably further dispersed with a pigment-dispersing agent from the viewpoint of enhancing the dispersibility in the ink. The pigment-dispersing agent will be described below.

The pigment may be a self-dispersible pigment. A self-dispersible pigment is obtained by modifying the surface of a pigment particle with a group having a hydrophilic group, thus includes pigment particles with groups having hydrophilicity bonded to the surface of the pigment particles. Examples of the hydrophilic group include a carboxy group, a sulfonic acid group, and a phosphorus-containing group. Examples of the phosphorus-containing group include a phosphoric acid group, a phosphonic acid group, a phosphinic acid group, a phosphite group, and a phosphate group.

Commercial examples of self-dispersible pigments include Cab-0-Jet (Registered Trademark) 200K, 250C, 260M, 270V (sulfonic acid group-containing self-dispersible pigments), Cab-0-Jet (Registered Trademark) 300K (carboxylic acid group-containing self-dispersible pigments), and Cab-0-Jet (Registered Trademark) 400K, 450C, 465M,

470V, 480V (phosphoric acid group-containing self-dispersible pigments) from Cabot Corporation.

The content of the pigment is not particularly limited, but is preferably 0.3 to 12% by mass with respect to the ink, from the viewpoint of easy adjustment of the viscosity of the ink to the below-described range and formation of an image with higher density. When the content of the pigment is 0.3% by mass or more, the color of an image to be obtained is more likely to become vivid, and when the content of the pigment is 5% by mass or less, the viscosity of the ink does not become too high, and therefore, the ejection stability is less likely to be impaired. From the same viewpoint, the content of the pigment is more preferably 0.5 to 8% by mass with respect to the ink.

1-1-2. Block Copolymer

The block copolymer may be contained as a pigment-dispersing agent or may be contained as a fixing resin (water-dispersible resin). In the present embodiment, the block copolymer is contained as a pigment-dispersing agent.

A conventionally used pigment-dispersing agent is a random copolymer randomly containing moieties interacting or reacting with an aggregating agent, or an AB-type block copolymer having a block (usually, a hydrophilic block A) containing many moieties interacting or reacting with an aggregating agent at only one location at the end of the molecule.

Since the random copolymer does not have a block containing many moieties, which interact or react with the aggregating agent, the random copolymer is less likely to interact or react with the aggregating agent. Although the AB-type block copolymer has a block containing many moieties that interact or react with the aggregating agent, the block is located at only one location at the end of the molecular thereof, therefore, the number of bonding points that can be bonded to the fabric is small. Therefore, the adhesion of the copolymer to the fabric is less likely to be obtained, and the washing fastness and the rubbing fastness are also low. In addition, since the copolymer may be continuously (in the form of a film) bonded to the fabric at one bonding point, the fabric also tends to become hard.

On the other hand, the block copolymer of the ABA-type or the like contains a block containing many moieties, which interact or react with the aggregating agent, at both ends of the molecule. As described above, since the blocks are located at least two locations of both ends of the molecule, there are many bonding points capable of bonding to the fabric, and the bonding to the fabric is more likely to become strong. Thus, the adhesion to a fabric is improved, and the washing fastness and the friction fastness are more likely to be enhanced. In addition, since the copolymer can be intermittently bonded to the fabric at a plurality of bonding points, the fabric is less likely to be hardened than the case where the copolymer is continuously bonded to the fabric at one bonding point. Note that the block containing many moieties that interact or react with the aggregating agent is a hydrophilic block.

That is, the block copolymer used in the the present embodiment includes two hydrophilic blocks A disposed at both ends of the molecule of the block copolymer and a hydrophobic block B disposed between the two hydrophilic blocks A.

The "hydrophilic block A" is a block which enhances the affinity with the aqueous solvent contained in the ink and contains a moiety which interacts or reacts with the aggregating agent adhering to the fabric, and is a block having a higher affinity with water among the blocks constituting the copolymer. The number of hydrophilic blocks is preferably two.

The hydrophilic block A contains a constituent unit derived from a monomer having a hydrophilic functional group (hereinafter, referred to as a "hydrophilic monomer"). Examples of the hydrophilic functional group include a hydroxyl group, a carboxyl group, and a sulfonic acid group.

Examples of the hydrophilic monomer constituting the hydrophilic block A include vinyl-based monomers containing a hydrophilic functional group, and examples thereof include monomers containing a carboxyl group or an acid anhydride group, such as unsaturated polyvalent carboxylic acids such as (meth)acrylic acid and maleic acid, and maleic anhydride; monomers containing a sulfonic acid group, such as styrenesulfonic acid and 4-(methacryloyloxy) butylsulfonic acid; and ethylene oxide-modified (meth)acrylic acid ester monomers such as ethylene oxide-modified (meth)acrylic acid alkyl esters. Of these, the hydrophilic monomer is preferably (meth)acrylic acid, from the viewpoint of imparting suitable water solubility to the hydrophilic block A.

The content ratio of the constituent unit derived from a hydrophilic monomer in the hydrophilic block A may be any value as long as it is greater than the content of the constituent unit derived from a hydrophilic monomer in the hydrophobic block B. Specifically, the content ratio of the constituent unit derived from a hydrophilic monomer in the hydrophilic block A is preferably 5% by mass or more based on 100% by mass of the hydrophilic block A. When the content ratio of the constituent unit derived from the hydrophilic monomer is 5% by mass or more, not only the dispersibility in the aqueous solvent is more likely to be enhanced, but also the hydrophilic monomer is more likely to interact or react with the aggregating agent, and thus the adhesiveness to the fabric is more likely to be enhanced. From the same viewpoint, the content ratio is more preferably 10 to 40% by mass.

The hydrophilic block A may further include a constituent unit derived from another monomer other than the hydrophilic monomer. Examples of other monomers include alkyl (meth)acrylates such as methyl (meth)acrylate and tert-butyl (meth)acrylate. Among these, C2 or higher alkyl esters such as (meth)acrylic acid butyl ester are preferred. This is because the Tg of the block copolymer is low and the fabric is less likely to become hard. However, the other monomers do

not include hydrophobic monomers described below.

The "hydrophobic block B" is a moiety adsorbing to the pigment, and refers to a block having a smaller affinity with the aqueous solvent contained in the ink among the blocks constituting the copolymer. The number of the hydrophobic blocks B is preferably one.

The hydrophobic block B includes a constituent unit derived from a monomer having a hydrophobic functional group (hereinafter, referred to as a "hydrophobic monomer"). Examples of the monomer having a hydrophobic functional group include vinyl-based monomers having an aromatic ring group or an alicyclic hydrocarbon group.

Examples of the vinyl-based monomer having an aromatic ring group include (meth) acrylates having an aromatic ring group, such as benzyl (meth) acrylate, phenyl (meth) acrylate, and phenoxyethyl (meth) acrylate; aromatic vinyl-based monomers such as styrene, α-methylstyrene, 4-methylstyrene, 2-methylstyrene, 3-methylstyrene, 4-methoxystyrene, 2-hydroxymethylstyrene or 1-vinylnaphthalene; and the like. Vinyl-based monomers having an aromatic ring group having 6 to 15 carbon atoms are preferable.

Examples of the vinyl-based monomer having an alicyclic alkyl group include cyclohexyl (meth) acrylate; methylcyclohexyl (meth) acrylate; cyclododecyl (meth) acrylate; bornyl (meth) acrylate; isobornyl (meth) acrylate; dicyclopentanyl (meth) acrylate; (meth) acrylates having an alicyclic alkyl group such as dicyclopentenyl (meth) acrylate and dicyclopentenyloxyethyl (meth) acrylate; and the like, and a vinyl-based monomer having an alicyclic alkyl group having 6 to 15 carbon atoms is preferable.

Of these, from the viewpoint of improving the adsorptivity to a pigment, the hydrophobic monomer is preferably a vinyl-based monomer having an aromatic ring group having 6 to 15 carbon atoms, such as styrene.

The content ratio of the constituent unit derived from the hydrophobic monomer in the hydrophobic block B is preferably 80% by mass or more with respect to the hydrophobic block B. When the content ratio is 80% by mass or more, the adsorptivity to a pigment is more likely to be increased. From the same viewpoint, the content ratio is more preferably more than 90% by mass, and even more preferably 95% by mass or more.

The hydrophobic block B may further include a constituent unit derived from another monomer other than the hydrophobic monomer. Examples of other monomers include the other monomers and the hydrophilic monomers described above. When the hydrophobic block B contains a constituent unit derived from a hydrophilic monomer, the content ratio of the constituent unit derived from the hydrophilic monomer in the hydrophobic block B is less than the content ratio of the constituent unit derived from the hydrophilic monomer in the hydrophilic block A. Specifically, the content of the constituent unit derived from a hydrophilic monomer is preferably 20% by mass or less, more preferably less than 10% by mass, and still more preferably 5% by mass or less, with respect to the hydrophobic block B. That is, of the two blocks, namely the hydrophilic block A, and the hydrophobic block B, the content of the constituent unit derived from the hydrophilic monomer (the number of moles of the hydrophilic functional group) is smallest in the hydrophobic block B.

The content of the hydrophobic block B in the ABA-type block copolymer is preferably 20% by mass or more and 80% by mass or less, and more preferably 20% by mass or more and 50% by mass or less, based on the total of the block copolymer. When the content is 20% by mass or more, bridging aggregation is more likely to be prevented due to a low content of the hydrophilic block A (or a low molecular weight), and when the content is 80% by mass or less, the affinity for aqueous solvents is more likely to be increased due to a high content of the hydrophilic block A (or a high molecular weight).

When the hydrophilic block is represented by A and the hydrophobic block is represented by B, examples of the structure of the block copolymer include ABA type and ABABA type. In particular, the block copolymer is preferably an ABA-type block copolymer composed of two hydrophilic blocks A disposed at both ends of the molecule thereof and a hydrophobic block B disposed therebetween.

The types and composition ratios of the monomers of the plurality of blocks A included in the block copolymer may be the same as or different from each other. Furthermore, when the block copolymer includes a plurality of blocks B, the types and compositional ratios of the monomers of the plurality of blocks B may be the same as or different from each other. In particular, the two hydrophilic blocks A preferably have the same monomer composition.

The weight average molecular weight of the block copolymer is preferably 5000 to 70000, and more preferably 7000 to 30000. As the weight average molecular weight increase, the dispersibility of the pigment in an aqueous solvent is more likely to increase, and as the weight average molecular weight decreases, bridging aggregation between pigment dispersions is more likely to be prevented. The weight average molecular weight of the block copolymer can be measured by gel permeation chromatography in terms of polystyrene.

The molecular weight distribution (PDI)) (weight average molecular weight (Mw) of block copolymer)/ (number-average molecular weight (Mn) of block copolymer) is preferably 2.0 or less, and more preferably 1.8 or less. A lower PDI means a narrower and more uniform molecular weight distribution, resulting in better dispersibility.

The acid number of the block copolymers is, for example, preferably 40 to 400 mgKOH/g, more preferably 40 to 300 mgKOH/g, and further preferably 40 to 190 mgKOH/g. When the acid value is 40 mgKOH/g or more, the hydrophilicity of the pigment-dispersing agent can be increased to further increase the dispersibility of the pigment. When the acid number is 400 mgKOH/g or less, the hydrophilicity of the pigment-dispersing agent can be further prevented from being excessively increased, and the water resistance of the resulting image-formed product can be further increased. The acid

number can be measured according to the measurement method of JIS K0070:1992.

The content of the block copolymer is preferably from 10 to 50% by mass, more preferably from 20 to 40% by mass, with respect to the pigment. When the content is 10% by mass or more, the dispersibility of the pigment in the pigment dispersion can be further enhanced. In addition, when the content of the pigment-dispersing agent is 50% by mass or less, it is possible to further suppress an increase in viscosity of the pigment dispersion due to an excessive content of the pigment-dispersing agent.

The method of synthesizing the block copolymer is not particularly limited, but the block copolymer can be obtained by, for example, sequentially polymerizing vinyl monomers constituting the block by a living radical polymerization method.

1-1-3. Aqueous Solvent

The aqueous solvent contains water, and preferably further contains a water-soluble organic solvent.

The content of the water is, for example, 20 to 70% by mass, and preferably 30 to 60% by mass with respect to the ink.

The water-soluble organic solvent is not particularly limited as long as it is compatible with water, but it is preferable that the ink does not easily thicken due to drying from the viewpoint of making it easy for the ink to permeate into the inside of the fabric and from the viewpoint of making it difficult for the discharge stability in the ink jet system to be impaired. Therefore, the ink preferably contains a high-boiling point solvent having a boiling point of 200°C or more.

The high-boiling point solvent having a boiling point of 200°C or higher may be a water-soluble organic solvent having a boiling point of 200°C or higher, and is preferably a polyol or a polyalkylene oxide.

Examples of the polyols having a boiling point of 200 °C or higher include dihydric alcohols such as 1,3-butanediol (boiling point 208°C ), 1,6-hexanediol (boiling point 223°C ) and polypropylene glycol; and trihydric or higher hydric alcohols such as glycerin (boiling point 290°C ) and trimethylolpropane (boiling point 295°C ).

Examples of polyalkylene oxides having a boiling point of 200°C or higher include ethers of dihydric alcohols such as diethylene glycol monoethyl ether (boiling points: 202°C), triethylene glycol monomethyl ether (boiling points: 245°C), tetraethylene glycol monomethyl ether (boiling points: 305°C), tripropylene glycol monoethyl ether (boiling points: 256°C), and polypropylene glycol; and ethers of trihydric or higher hydric alcohols such as glycerin (boiling points: 290°C) and hexanetriol.

The solvent may further include another solvent other than the high-boiling point solvent. Examples of other solvents include polyhydric alcohols having a boiling point of lower than 200°C (e.g., ethyleneglycol, propyleneglycol, and hexanetriol); polyhydric alcohol ethers having a boiling point of lower than 200°C (e.g., ethyleneglycol monomethyl ether, ethyleneglycol monobutyl ether, diethyleneglycol monomethyl ether, diethyleneglycol dimethyl ether, propyleneglycol monomethyl ether, and propyleneglycol monoethyl ether); monohydric alcohols (e.g., methanol, ethanol, propanol, pentanol, hexanol, cyclohexanol, and benzyl alcohols); amines (e.g., ethanol amine, N-ethyldiethanolamine, morpholine, N-ethylmorpholine, ethylene diamine, diethylene diamine, and triethylene tetramine); amides (e.g., formaldehyde, N,N-dimethylformamide, and N,N-dimethylacetamide); heterocycles (e.g., 2-pyrrolidone. N-methyl-2-pyrrolidone, N-cyclohexyl-2-pyrrolidone, 2-oxazolidone, and 1,3-dimethyl-2-imidazolidine); sulfoxides (e.g., dimethylsulfoxide); and sulfones (e.g., sulfolane).

The content of the water-soluble organic solvent is, for example, 20 to 70% by mass, and preferably 30 to 60% by mass, with respect to the ink.

1-1-4. Other Components

The ink may further contain components other than those described above, if necessary. Examples of the other components include a water-dispersible resin and an additive such as a neutralizer.

(Water-dispersible Resin)

The water-dispersible resin can have a function of fixing the pigment or the like to the fabric. The water-dispersible resin may be contained in the ink as resin particles. Note that the water-dispersible resin is preferably a water-dispersible resin other than the above-described block copolymer.

Examples of the water-dispersible resin include a urethane resin, a butadiene resin, a (meth) acrylic resin, and polystyrene. Examples of the butadiene resin include a styrene-butadiene copolymer and an acrylonitrile-butadiene copolymer. Examples of the (meth) acrylic resin include a (meth) acrylic acid ester copolymer, a styrene-(meth) acrylic copolymer, a silicone-(meth) acrylic copolymer, and an acrylic-modified fluorine resin. Among these, a urethane resin, a (meth) acrylic acid ester copolymer as a (meth) acrylic resin, and a styrene-(meth) acrylic copolymer are preferable, and a urethane resin is more preferable. It is presumed that these are bonded to the block copolymer by an intermolecular

hydrogen bond, the adhesiveness of the pigment to the fabric is more easily enhanced, and the friction fastness is more easily enhanced.

Examples of the the styrene-(meth) acrylic copolymer include styrene-(meth) acrylate copolymers and styrene-(meth) acrylate-(meth) acrylate ester copolymers. Examples of the (meth) acrylates include benzyl (meth) acrylate, cyclohexyl (meth) acrylate, methyl (meth) acrylate, ethyl (meth) acrylate, propyl (meth) acrylate, butyl (meth) acrylate, hexyl (meth) acrylate, octyl (meth) acrylate, lauryl (meth) acrylate, 2-ethylhexyl (meth) acrylate, 2-ethylhexylcarbitol (meth) acrylate, phenol EO-modified (meth) acrylate, isobornyl (meth) acrylate, dicyclopentenyl (meth) acrylate, dicyclopentanyl (meth) acrylate, and dicyclopentenyloxyethyl (meth) acrylate.

The urethane resin is a polymer obtained by reacting a polyol with a polyisocyanate. Examples of the polyol include polypropylene glycol, polyethylene glycol, polytetramethylene glycol, poly (ethylene adipate), poly (diethylene adipate), poly (propylene adipate), poly (tetramethylene adipate), poly (hexamethylene adipate), poly-ε-caprolactone, poly (hexamethylene carbonate), and silicone polyols. Examples of the isocyanate include tolylene diisocyanate, 4,4-diphenylmethane diisocyanate, xylylene diisocyanate, naphthalene diisocyanate, hexamethylene diisocyanate, hydrogenated tolylene diisocyanate, hydrogenated 4,4-diphenylmethane diisocyanate, isophorone diisocyanate, and tetramethylxylylene diisocyanate.

The Tg of the water-dispersible resin is not particularly limited, but is preferably low from the viewpoint that the fabric is less likely to become hard even after image formation and the texture is easily maintained. The Tg of the water-dispersible resin may be, for example, -30 to 100°C, and preferably -10 to 50°C.

The acid value of the water-dispersible resin is not particularly limited, but is preferably 44 mgKOH/g or more, and more preferably 60 mgKOH/g or more, for example, from the viewpoint of enhancing dispersion stability. The upper limit of the acid number may be, for example, 110 mgKOH/g. The acid value can be measured by the same method as described above.

The average particle size of the water-dispersible polymer is not particularly limited, but is preferably 300 nm or less, and more preferably 130 nm or less, from the viewpoint of suppressing nozzle clogging of an inkjet head. The average particle size of the water-dispersible resin can be measured by laser diffraction scattering particle size distribution measurement.

The content of the water-dispersible resin is preferably 1 to 15% by mass with respect to the ink. When the content of the water-dispersible resin is 1% by mass or more, the viscosity of the ink is more likely to be moderately increased, and therefore, not only the ejection stability can be further increased, but also the adhesion to a fabric and the abrasion resistance of the obtained image are more likely to be increased. When the content of the water-dispersible resin is 15% by mass or less, the viscosity of the ink does not become excessively high, and thus nozzle clogging or the like is less likely to occur. From the same viewpoint, the content of the water-dispersible resin is more preferably 2 to 10% by mass with respect to the ink.

(Additive)

Examples of the additive include a neutralizer, a surfactant, an antiseptic agent, an antifungal agent, and a pH adjuster.

In the present embodiment, the ink may further contain a neutralizer when the block copolymer has an anionic group such as a carboxyl group and a sulfonic acid group. As the neutralizer, a known basic compound can be used, and for example, sodium hydroxide, potassium hydroxide, ammonia, triethylamine, and the like can be used. Inclusion of a neutralizer in the pigment dispersion can moderately promote dissociation of the anionic group in the pigment dispersion and further enhance the dispersibility.

The content of the neutralizer is not particularly limited, but it is preferable to include an amount such that the neutralization ratio is 30% or more and 100% or less. The neutralization ratio can be determined by the following equation (1).

Neutralization ratio (%) = (Weight of basic compound [g] / (Equivalents of basic compound [g/mol] × Valence of basic compound)) ÷ ((Acid number of pigment-dispersing agent [mgKOH/g] × Weight of pigment-dispersing agent

[g] ) / (56 [g/mol] × 1000)) ... Equation (1)

The surfactant can lower the surface tension of the ink and increase the wettability of the ink to the fabric. The type of the surfactant is not particularly limited, and may be, for example, an acetylene glycol-based surfactant, a silicone-based surfactant, or a fluorine-based surfactant.

Examples of the antiseptic or antifungal agent include aromatic halogen compounds (e.g., Preventol CMK),

methylene dithiocyanate, halogen-containing nitrogen-sulfur compounds, 1,2-benzisothiazolin-3-one (e.g., PROXEL GXL), and the like.

Examples of the pH adjuster include citric acid, sodium citrate, hydrochloric acid, sodium hydroxide, and the like.

1-2. Pretreatment Liquid

The pretreatment liquid contains a aggregating agent.

1-2-1. Aggregating agent

The type of the aggregating agent is not particularly limited as long as the aggregating agent aggregates the pigment or the like contained in the ink. The aggregation may be carried out using a change in pH or using an electrical action.

Examples of the aggregating agent that causes aggregation by a change in pH include organic acids. Examples of the organic acid include carboxylic acids having 6 or less carbon atoms, such as saturated fatty acids (e.g., formic acid, acetic acid, propionic acid, butyric acid, valeric acid, and hexanoic acid) and hydroxy acids (e.g., lactic acid, malic acid, and citric acid).

Examples of the aggregating agent which causes aggregation by an electrical action include a compound having a cationic group and a polyvalent metal salt. These aggregating agents can interact or react with the anionic block copolymer which is a pigment-dispersing agent contained in the ink.

Examples of the cationic group in the compound having a cationic group include a secondary amino group, a tertiary amino group, and a quaternary ammonium salt group. Examples of the compound having a cationic group include cationic resins and cationic surfactants, with cationic resins being preferred.

Examples of the cationic resin include cationic urethane resin, cationic olefin resin, and cationic alkylamine resin. Examples of commercially available products include MPT-60 (manufactured by Mitsubishi Pencil Co., Ltd), Unisence KHE100L (manufactured by Senka Corporation), and MZ477 (urethane resins manufactured by Takamatsu Oil & Fat Co., Ltd). Among them, cationic alkylamine resins MPT-60 and UNISENCE KHE100L (manufactured by Senka Corporation) are preferable from the viewpoint that they more easily interact or react with the block copolymers.

The polyvalent metal salt may be a water-soluble compound having a divalent or more polyvalent metal ion and an anion to be bonded thereto. Examples of polyvalent metal ions include divalent metal ions such as $Ca^{2+}$, $Cu^{2+}$, $Ni^{2+}$, $Mg^{2+}$, $Zn^{2+}$, $Ba^{2+}$ and trivalent metal ions such as $Al^{3+}$, $Fe^{3+}$, $Cr^{3+}$ and the like. Examples of the anion include $Cl^-$, $I^-$, Br, $SO_4^{2-}$, $ClO_3^-$, $NO_3^-$, $HCOO^-$, and $CH_3COO^-$. Examples of such polyvalent metal salts include zinc acetate dihydrate, magnesium nitrate, calcium chloride, magnesium chloride, aluminum chloride, magnesium sulfate, calcium salts of, for example, acetic acid, magnesium salts, metal salts of organic acids such as nickel salts and aluminum salts. Among these, calcium salts and magnesium salts are preferable, and calcium nitrate and calcium chloride are preferable.

Among these, a compound having a cationic group or an organic acid is preferable, and a compound having a cationic group is more preferable.

The content of the aggregating agent in the pretreatment liquid is not particularly limited, but is preferably 0.1 to 15% by mass, more preferably 0.5 to 8% by mass with respect to the pretreatment liquid.

1-2-2. Other Components

The pretreatment liquid may further include a solvent, a pH adjuster, and an additive such as an antiseptic agent, if necessary. The same solvents, pH adjusters, and antiseptic agents as those used in the ink can be used.

2. Image Forming Method

An image-formed product according to an embodiment of the present invention can be produced through a step of applying, by an ink jet method, an ink onto a fabric to which an aggregating agent adheres. The fabric having an aggregating agent adhering thereto can be obtained by applying a pretreatment liquid containing an aggregating agent to a fabric. As the ink and the pretreatment liquid, the above-described ink set can be used.

That is, the image forming method according to the present embodiment includes the following steps: 1) pretreating a fabric to obtain a fabric having an aggregating agent adhering thereto, and 2) applying an ink onto the fabric by an inkjet method.

2-1. Step of Applying a Pretreatment Liquid

In this step, the fabric is pre-treated to obtain a fabric having an aggregating agent adhering thereto.

Specifically, a fabric is brought into contact with a pretreatment liquid containing an aggregating agent, thereby obtaining a fabric to which the aggregating agent adheres. The method of bringing the fabric into contact with the pretreatment liquid is not particularly limited, and may be, for example, a pad method, a coating method, a spraying method, or an inkjet method.
The fabric brought into contact with the pretreatment liquid may be heated and dried by using warm air, a hot plate, or a heat roller.
The amount of the pretreatment liquid to be applied is not particularly limited, and can be adjusted according to the type of fabric, the amount of the ink to be applied, and the like.

2-2. Step of Applying Ink

Next, the ink is applied by an inkjet method onto the fabric to which the aggregating agent adheres.
The type of fiber included in the fabric is not particularly limited, and examples thereof include natural fibers such as cotton (cellulose fiber), hemp, wool, and silk; chemical fibers such as rayon, vinylon, nylon, acryl, polyurethane, polyester, or acetate; and mixed spun fibers thereof. Of these, cotton fabric is preferred. The fabric may be any form of these fibers, such as a woven fabric, a nonwoven fabric, and a knitted fabric. Furthermore, the fabric may be a blended woven fabric or a blended nonwoven fabric of two or more types of fibers.
In the present embodiment, the ink contains the block copolymer as a pigment-dispersing agent. Since the block copolymer has hydrophilic blocks at both molecular ends, the block copolymer is less likely to cause bridging aggregation with another pigment-dispersing agent than a conventional AB-type block copolymer having a hydrophilic block at only one location at the molecular end. Thus, the aggregation of the pigment dispersion is easily suppressed, and high ejection stability is obtained.

2-3. Other Steps

The image forming method may further include other steps as necessary. For example, a step of applying a post-treatment liquid (also referred to as an overcoat liquid) onto the ink applied to the fabric may be further performed.
The method of applying the post-treatment liquid is not particularly limited and may be, for example, any of a spraying method and an inkjet method. Thereafter, the fabric to which the post-treatment liquid has been applied may be dried.

3. Image-formed Product

The obtained image-formed product includes the fabric to which the aggregating agent adheres, and an image layer.
The aggregating agent is preferably disposed on the surface of the fabric. The image layer is preferably disposed on the surface of the fabric, on which the aggregating agent is disposed. The image layer contains a pigment and the block copolymer described above, and may further contain the water-dispersible resin and the like, if necessary.
Since the block copolymer can be bonded to the fabric at a plurality of bonding points including two positions of both molecular ends, the pigment can be favorably adhered to the fabric as compared with a conventional AB type block copolymer which is bonded to the fabric at only one location at the molecular end. Thus, the image-formed product has high washing fastness and high friction fastness. Furthermore, since the block copolymer is bonded to a fabric at a plurality of locations, the fabric is less likely to be hardened than a conventional AB type block copolymer that is bonded to a fabric at only one location.
In the above-described embodiment, an example in which the block copolymer is used as a dispersant for dispersing a pigment is described, but the present invention is not limited thereto, and the block copolymer may be used as a water-dispersible resin (fixing resin).

Example

Hereinafter, the present invention will be specifically described with reference to Examples, but the present invention is not limited thereto.

1. Preparation of Ink

1-1. Preparation of Block Copolymer

<Preparation of Block Copolymer P-1>

A flask equipped with an argon gas inlet tube and a stirring blade was charged with 138.8 g of N-butyl methacrylate (hereinafter referred to as "BMA"), 73.5 g of methyl methacrylate (hereinafter referred to as "MMA"), 59.6 g of methacrylic acid (hereinafter referred to as "MAA"), 23.3 g of ethyl-2-methyl-2-n-butyltetralinyl-propionate (hereinafter referred to as "BTEE"), 14.3 g of dibutyl ditelluride (hereinafter referred to as "DBDT"), 2.6 g of 2,2'-azobisisobutyronitrile (hereinafter referred to as "AIBN") , 166.1 g of methylethylketone, and 166.1 g of acetonitrile, and the mixture was reacted at 60°C for 18 hours. Thus, the prepolymer (hydrophilic block A1, Mw:6920) was obtained.

A mixed solution of 233 g of benzyl methacrylate (hereinafter, referred to as "BzMA"), 23.3 g of MAA, 2.6 g of AIBN, 98.0 g of methylethylketone, and 98.0 g of acetonitrile, which had been replaced with argon in advance, was added to the reaction liquid, and the mixture was reacted at 60°C for 9 hours. A prepolymer comprising a hydrophilic block A and a hydrophobic block B (Mw:9910) was thus obtained.

A mixed solution of 138.8g of BMA, 73.5 g of MMA, 59.6g of MAA, 1.3 g of AIBN, 61.1 g of methylethyl ketone, and 388.5 g of acetonitrile, which had been replaced with argon in advance, was added to the reaction liquid, and the mixture was reacted at 60°C for 23 hours. Thus, a polymer comprising a hydrophilic block A1, a hydrophobic block B and a hydrophilic block A2 (Mw: 13800) was obtained.

Thereafter, 3. 6 kg of methylethyl ketone was added to the reaction solution, and the mixture was poured into 21 L of heptane under stirring. The precipitated polymer was suction-filtered and dried to obtain a block copolymer P-1.

<Preparation of Block Copolymer P-2>

A flask equipped with an argon gas inlet tube and a stirring blade was charged with 4.16g of BMA, 2.20 g of MMA, 1.79g of MAA, 0.70 g of BTEE, 0.43g of DBDT. 0.08 g of AIBN, 6.20 g of methylethylketone, and 6.28 g of acetonitrile, and the mixture was reacted at 60°C for 13 hours. Thus, the prepolymer (hydrophilic block A1, Mw:5790) was obtained.

A mixed solution of 7.00 g of cyclohexylmethacrylate (hereinafter referred to as "CHMA"), 0.70 g of MAA, 0.8 g of AIBN, 2.94 g of methylethyl ketone, and 2.94 g of acetonitrile, which had been replaced with argon in advance, was added to the reaction liquid, and the mixture was reacted at 60°C for 10 hours. Thus, a prepolymer (Mw: 9180) containing the hydrophilic block A1 and the hydrophobic block B was obtained.

A mixed solution of 4.16 g of BMA, 2.20g of MMA, 1.79g of MAA, 0.08g of AIBN, 1.84 g of methylethyl ketone, 11.66 g of acetonitrile, which had been replaced with argon in advance, was added to the reaction liquid, and the mixture was reacted at 60°C for 24 hours. Thus, a polymer (Mw: 13300) containing a hydrophilic block A1, a hydrophobic block B and a hydrophilic block A2 was obtained.

Thereafter, 108 g of methylethylketone was added to the reaction solution, and the mixture was poured into 0.63 L of heptane under stirring. The precipitated polymer was collected by suction filtration and dried to obtain a block copolymer P-2.

<Preparation of Block Copolymer P-3>

Block copolymers P-3 were prepared in the same manner as the block copolymers P-1 except that the monomer composition of the hydrophilic block A2 was changed as shown in Table 1.

<Preparation of Block Copolymer P-4>

The following BAA type block copolymer P-4 was prepared with reference to Synthesis Example 1 of Japanese Patent Application Laid-Open No. 2009-299842.

[Chemical Formula 1]

Hydrophobic block B    Hydrophilic block A1    Hydrophilic block A2

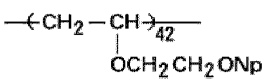
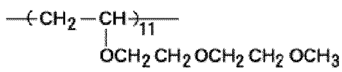
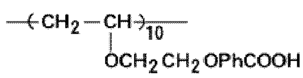

<Preparation of Block Copolymer P-5>

With reference to the description of dispersion liquid 1 in Japanese Unexamined Patent Application Publication (Translation of PCT Application) No. 2010-513672, block copolymers P-5 were prepared.

<Preparation of Block Copolymer P-6>

A flask equipped with an argon gas inlet tube and a stirring blade was charged with 1165.0 g of BzMA, 116.5g of MAA, 116.5g of BTEE, 43.0 g of DBDT, 6.4 g of AIBN, 1282.0 g of methylethylketone, the mixture was reacted at 60°C for 24 hours.

A mixed solution of 1388.0 g of BMA, 734.0 g of MMA, 596.0 g of MAA, 12.8g of AIBN, 538.0 g of methylethyl ketone, 1677.0 g of acetonitrile, and 503.0 g of methanol, which had been replaced with argon in advance, was added to the reaction liquid, and the mixture was reacted at 60°C for 28 hours.

To the reaction solution was added 18. 7 kg of methyl ethyl ketone, and the mixture was poured into 107 L of heptane with stirring. The precipitated polymer was suction-filtered and dried to obtain a block copolymer.

<Preparation of Random Copolymer P-7>

A random copolymer P-7 having a monomer composition shown in Table 1 was prepared by known radical polymerization.

The compositions of the block copolymers P-1 to P-6 and the random copolymer P-7 are presented in Table 1.

[Table 1]

| Pigment-dispersing agent | Monomer composition (mass ratio) | | | Block mass ratio | | | Mw(A)/Mw(B) | Molecular weight | Acid value (mg/KOH) | Remarks |
|---|---|---|---|---|---|---|---|---|---|---|
| | A | B | A2 | A | B | A2 | | | | |
| P-1 | BMA/MMA/MAA 51/27/22 | BzMA/MAA 99/1 | BMA/MMA/MAA 51/27/22 | 34 | 32 | 34 | 1.3 | 13800 | 100 | ABA type block copolymer (Present invention) |
| P-2 | BMA/MMA/MAA 51/27/22 | CHMA/MAA 99/1 | BMA/MMA/MAA 51/27/22 | 34 | 32 | 34 | 1.5 | 13300 | 117 | ABA type block copolymer (Present invention) |
| P-3 | BMA/MMA/MAA 52/27/21 | BzMA/MAA 99/1 | BMA/MMA/MAA 58/31/12 | 35 | 30 | 35 | 1.4 | 15000 | 77 | ABA'-type block copolymer (Present invention) |
| P-4 | See [Chemical Formula 1] | | | - | | | - | - | 40 | BAA type block copolymer (Comparison) |
| P-5 | See [Formula 1] | | | - | | | - | 7000 | 134 | AB type block copolymer (Comparison) |
| P-6 | BMA/MMA/MAA 51/27/22 | BzMA/MAA 99/1 | - | 68 | 32 | - | - | 18000 | 102 | AB type block copolymer (Comparison) |
| P-7 | BMA/BzMA/MMA/MAA=36/30/19/15 | | | - | | | - | - | 96 | Random copolymer (Comparison) |

BMA: Butyl methacrylate
MMA: Methyl methacrylate
MAA: Methacrylic acid
BzMA: Benzyl methacrylate

In Table 1, the acid values are values measured by the method of JIS K0070:1992. The molecular weight is a weight average molecular weight Mw, and is a value obtained by the GPC method in terms of polystyrene.

1-2. Preparation of Pigment Dispersion

<Preparation of Pigment Dispersions A-1 to A-7>

To 20.0 parts by mass of carbon black pigment, a block copolymer shown in Table 2 as a pigment-dispersing agent in an amount of 30% by mass with respect to the pigments, 20 parts by mass of propyleneglycol (PG), and 5 parts by mass of 1,2-hexanediol (1,2-HD) were added, and ion-exchanged water was added so as to obtain an aqueous pigment-dispersed liquid having a pigment concentration of 20.0%, followed by mixing.
The mixture was subjected to a dispersion treatment using a horizontal media disperser (Labo Star mini LMZ015, zirconia bead size 0. 3 mm, manufactured by Ashizawa Finetech Co., Ltd) to prepare pigments dispersions A-1 to A-7 having a pigments concentration of 20.0%.
The volume-based average particle size was measured using a particle size distribution analyzer (Zeta Nanosizer 1000HS, manufactured by Malvern Instruments Ltd).
The pigment-dispersing agents used in the pigment dispersions A-1 to A-7 are shown in Table 2.

[Table 2]

| Pigment dispersion No | Pigment-dispersing agent | Remarks |
|---|---|---|
| A-1 | P-1 | Present invention |
| A-2 | P-2 | Present invention |
| A-3 | P-3 | Present invention |
| A-4 | P-4 | Comparison |
| A-5 | P-5 | Comparison |
| A-6 | P-6 | Comparison |
| A-7 | P-7 | Comparison |

1-3. Preparation of Ink

<Preparation of Ink B-1>

The following components were mixed to obtain ink B-1.

Pigment dispersion A-1: 30 parts by mass
Water-dispersible resins WBR-2000U (ACRYIT, manufactured by Taisei Fine Chemical Co., Ltd), polyurethane resin particles, Tg: 45°C: 10 parts by mass as solid content
Glycerin: 10 parts by mass
Propylene glycol: 20 parts by mass
Proxel GXL (S) (antiseptic agent): 0.05 parts by mass
Olfine E1010 (manufactured by Nissin Chemical Industry Co., Ltd., surfactant): 0.1 parts by mass
Ion-exchanged water: Remaining amount
Note that the amount of the ion-exchanged water was adjusted so that the total amount of the ink becomes 100 parts by mass.

<Preparation of Inks B-2 to B-10>

Inks B-2 to B-10 were prepared in the same manner as the ink B-1 except that the types of the pigment dispersion liquid and the water-dispersible resin were changed as shown in Table 3.
Types of the pigment dispersions and the water-dispersible resins used in the inks B-1 to B-10 are shown in Table 3.

[Table 3]

| Ink No. | Pigment dispersion | Pigment-dispersing agent | Water-dispersible resin | Content (parts by mass) |
|---|---|---|---|---|
| B-1 | A-1 | P-1 | WBR-2000U | 10 |
| B-2 | A-1 | P-1 | J7600 | 10 |
| B-3 | A-1 | P-1 | J390 | 10 |
| B-4 | A-1 | P-1 | P-1 | 10 |
| B-5 | A-2 | P-2 | WBR-2000U | 10 |
| B-6 | A-3 | P-3 | WBR-2000U | 10 |
| B-7 | A-4 | P-4 | WBR-2000U | 10 |
| B-8 | A-5 | P-5 | WBR-2000U | 10 |
| B-9 | A-6 | P-6 | WBR-2000U | 10 |
| B-10 | A-7 | P-7 | WBR-2000U | 10 |
| • WBR-PT (2000U manufactured by Taisei Fine Chemical Co., Ltd., polyurethane resin particles, Tg: 45°C)<br>• J7600 (JONCRYL 7600 manufactured by BASF Japan Ltd.; (meth) acryl resin particles, Tg: 35°C)<br>• J390 (JONCRYL 390 manufactured by BASF Japan Ltd., styrene-acrylic acid copolymer, Tg: -5°C, acid value: 54 mgKOH/g, average particle size: 0.09 μm).<br>• The block copolymer P-1 | | | | |

2. Preparation of Pretreatment Liquid

2-1. Preparation of Pretreatment Liquid

<Preparation of Pretreatment Liquid PC-1>

The following components were mixed to prepare a pretreatment liquid PC-1.

Aggregating agent 1 (Unisence KHE100L): 4 parts by mass
Glycerin: 10 parts by mass
Propylene glycol: 20 parts by mass
Proxel GXL (S) (antiseptic agent): 0.05 parts by mass
Olfine E1010 (manufactured by Nissin Chemical Industry Co., Ltd., surfactant): 0.1 parts by mass
Ion-exchanged water: 44.85 parts by mass

<Preparation of Pretreatment Liquids PC-2 and PC-3>

Pretreatment liquids PC-2 and PC-3 were prepared in the same manner except that the type and content of the aggregating agent were changed as shown in Table 4 and the amount of ion-exchanged water was adjusted so that the total amount becmes 100 parts by mass.

The compositions of the pretreatment liquids PC-1 to PC-3 are shown in Table 4.

[Table 4]

| Pretreatment liquid No. | Aggregating agent | | Content (parts by mass) | Remarks |
|---|---|---|---|---|
| PC-1 | Aggregating agent 1 | Unisense KHE100L | 4 | Cationic resin |
| PC-2 | Aggregating agent 2 | Lactic acid | 4 | Organic acid |
| PC-3 | Aggregating agent 3 | Magnesium nitrate | 4 | Polyvalent metal salt |
| • Unisense KHE100L: poly (diallyldimethylammonium chloride) | | | | |

3. Image formation and Evaluation

3-1. Image Formation

<Test 1>

(1) Pretreatment

A fabric (white) of 100% cotton was prepared.

Next, a pretreatment liquid of the type indicated in Table 5 was applied to the surface of the fabric in an application amount of 10 g/$m^2$ by an inkjet method, and then dried at 100°C for 2 minutes.

(2) Application of Ink

Next, an inkjet printer including an inkjet head (Konica Minolta Head KM1024iMAE) was prepared as an image forming apparatus. Then, the ink shown in Table 5 was ejected from the nozzles of the ink jet head in an application amount of 15 g/$m^2$ to form a solid image on the pretreated fabric (ink application step).

To be specific, a solid image (200 mm × 200 mm in total) was formed by the main scanning 540dpi × subscanning 720dpi. Dpi represents the number of ink droplets (dots) per 2.54 cm. The ejection frequency was set to 22.4 kHz.

(3) Drying and Fixing

Thereafter, the fabric to which the ink was applied was dried at 150°C for 3 minutes by a belt conveyance type dryer

. Thus, an image-formed product was obtained.

<Tests 2 to 24>

Image formation was performed in the same manner as in Test 1 except that least one of the type of the pretreatment liquid and the type of the ink was changed as shown in Table 5.

3-2. Evaluation

The following evaluations are performed on the obtained image-formed product.

(Washing Fastness)

The wash fastness of the image-formed product was evaluated in terms of color fading by comparing a sample after washing once with a household washing machine (washing with water) with a sample not washed.
Then, evaluation was performed based on the following evaluation criteria.

◎: Level at which almost no color fading occurs after rinsing with water and there is no problem in practical use
◦: Level at which the color fading after rinsing with water is slight and there is no problem in practical use
△: Level at which the color faded after rinsing with water, but not posing a problem in practical use
×: Level at which color fading after rinsing with water is significant and there is a problem in practical use

When it was △ or more, it was determined to be acceptable.

(Friction Fastness)

Gakushin-type friction fastness tester (product name: AB-301, manufactured by Tester Sangyo Co., Ltd) was used to impregnate a white fabric for JIS color fastness test (JIS L 0803:2011 Standards 3-1) with pure water under conditions of a load of 200.0 g and a speed of 10.0 cm/s, and the reciprocation was performed on the ink applied surface of the image-formed product for 10.0 times.

Thereafter, the dye migration density to the test white fabric was evaluated. Then, evaluation was performed based on the following evaluation criteria.

◦: Level at which the migration density is slight or almost none and there is no problem in practical use
△: Level at which the migration density is at certain level but but not posing a problem in practical use
×: Level at which migration density is significant and there is a problem in practical use

When it was △ or more, it was determined to be acceptable.

(Ejection Stability)

The ejection stability and the presence or absence of nozzle clogging of the inks B-1 to B-10 used in the image formation were evaluated by the following methods.

(1) Ejection Stability

Continuous ejection was performed for 10 minutes under the image forming conditions, and then injection defect, bending, and the like were checked with an injection inspection machine. Next, the ejection stability was evaluated according to the following criteria.

5: There is no problem even in continuous use for a long time
4: No ejection failure occurs
3: Slight bending occurs but there is no problem
2: Ejection failure occurs during ejection for printing
1: Ejection failure occurs immediately or normal ejection is not possible

The case of 3 or more was determined to be satisfactory.

(2) Nozzle Clogging

Maintenance of the nozzle surface was performed during image formation using the print tester, and the state of nozzle chipping after the maintenance was checked with a nozzle check chart. Then, nozzle clogging was evaluated according to the following criteria.

5: Clogging does not occur even in continuous use for a long time
4: Clogging does not occur
3: Clogging occurs but recovered by maintenance
2: A large number of clogging that cannot be recovered by maintenance occur
1: Ink cannot be normally ejected

The case of 3 or more was determined to be satisfactory.
Table 5 shows the evaluation results of the image-formed products of Tests 1 to 24, and Table 6 shows the evaluation results of the ejection stability of the inks.

[Table 5]

| Test No. | Pretreatment liquid | Ink | Wash fastness | Rub fastness | Remarks |
|---|---|---|---|---|---|
| 1 | Aggregating agent 1 | B-1 | ◎ | ○ | Present invention |
| 2 | | B-2 | ◎ | △ | Present invention |
| 3 | | B-3 | ◎ | △ | Present invention |
| 4 | | B-4 | ○ | △ | Present invention |
| 5 | | B-5 | ◎ | ○ | Present invention |
| 6 | | B-6 | ○ | ○ | Present invention |
| 7 | | B-7 | × | × | Comparison |
| 8 | | B-8 | × | × | Comparison |
| 9 | | B-9 | × | × | Comparison |
| 10 | | B-10 | × | × | Comparison |

(continued)

| Test No. | Pretreatment liquid | Ink | Wash fastness | Rub fastness | Remarks |
|---|---|---|---|---|---|
| 11 | Aggregating agent 2 | B-1 | ○ | ○ | Present invention |
| 12 | | B-5 | ○ | ○ | Present invention |
| 13 | | B-6 | △ | ○ | Present invention |
| 14 | | B-7 | × | × | Comparison |
| 15 | | B-8 | × | × | Comparison |
| 16 | | B-9 | × | × | Comparison |
| 17 | | B-10 | × | × | Comparison |
| 18 | Aggregating agent 3 | B-1 | ○ | ○ | Present invention |
| 19 | | B-5 | ○ | △ | Present invention |
| 20 | | B-6 | △ | △ | Present invention |
| 21 | | B-7 | × | × | Comparison |
| 22 | | B-8 | × | × | Comparison |
| 23 | | B-9 | × | × | Comparison |
| 24 | | B-10 | × | × | Comparison |

[Table 6]

| Ink No. | Ejection stability | Nozzle clogging | Remarks |
|---|---|---|---|
| B-1 | 5 | 5 | Present invention |
| B-2 | 4 | 4 | Present invention |
| B-3 | 4 | 5 | Present invention |
| B-4 | 3 | 3 | Present invention |
| B-5 | 4 | 4 | Present invention |
| B-6 | 4 | 4 | Present invention |
| B-7 | 2 | 2 | Comparison |
| B-8 | 2 | 2 | Comparison |
| B-9 | 2 | 2 | Comparison |
| B-10 | 1 | 2 | Comparison |

For Image Formation Evaluation

As illustrated in Table 5, the image-formed products obtained in Tests 7 to 10, 14 to 17, and 21 to 24 (comparison) were inferior in both the washing fastness and the friction fastness, whereas the image-formed products obtained in Tests 1 to 6, 11 to 13, and 18 to 20 (the present invention) were satisfactory in both the washing fastness and the friction fastness.

From these results, it is considered that since the ABA-type and ABC-type block copolymers in which hydrophilic blocks are present in two locations of the polymer have a plurality of moieties reacting with a aggregating agent, the bindability to fabric is higher and the strength is higher as compared with the AB-type block copolymer in which a hydrophobic block is present in one end. Thus, it is considered that the adhesiveness to a fabric is improved, and the washing fastness and the rubbing fastness are improved.

In particular, from the comparison between Tests 1, 11, and 18, it is found that when a urethane resin is used as the water-dispersible resin, the combination with the pretreatment liquid containing a cationic resin as the aggregating agent provides higher washing fastness and further improved bindability to a fabric.

Evaluation of Ejection Property

Furthermore, as illustrated in Table 6, it is found that the inks B-7 to B-10 used in Tests 7 to 10, 14 to 17, and 21 to 24 (comparison) are inferior in ejection stability and nozzle clogging, whereas the inks B-1 to B-6 used in Tests 1 to 6, 11 to 13, and 18 to 20 (the present invention) are satisfactory in ejection stability and nozzle clogging.

From these, it is considered that in the ABA-type and ABC-type block copolymers in which hydrophilic blocks are present in two locations of the polymer, bridging aggregation with another dispersant is less likely to occur and the formation of aggregates of the pigment dispersion is more likely to be suppressed than in the AB-type block copolymer in which a hydrophilic block is present in one location of the end, and thus the ejection stability is improved.

[Industrial Applicability]

According to the present invention, it is possible to provide an ink set for inkjet textile printing which can form an image having high washing fastness and friction fastness while having satisfactory ejection stability.

Although embodiments of the present invention have been described and illustrated in detail, it is clearly understood that the same is by way of illustration and example only and not limitation, the scope of the present invention should be interpreted by terms of the appended claims.

## Claims

**1.** An ink set for inkjet textile printing, comprising: an ink and a pretreatment liquid, wherein

the pretreatment liquid contains an aggregating agent,
the ink contains a pigment, a block copolymer, and an aqueous solvent, and
the block copolymer contains two hydrophilic blocks A respectively disposed at both ends of a molecule of the block copolymer and a hydrophobic block B disposed between the two hydrophilic blocks A, the two hydrophilic blocks A interacting or reacting with the aggregating agent.

**2.** The ink set for inkjet textile printing according to claim 1, wherein
the block copolymer is an ABA-type block copolymer composed of the two hydrophilic blocks A and the hydrophobic block B that is one hydrophobic block B.

**3.** The ink set for inkjet textile printing according to claim 1 or 2, wherein
the two hydrophilic blocks A have monomer compositions identical to each other.

**4.** The ink set for inkjet textile printing according to any one of claims 1 to 3, wherein:

the hydrophilic block A contains a constituent unit derived from a hydrophilic monomer composed of a vinyl-based monomer containing a hydrophilic functional group selected from the group consisting of a hydroxyl group, a carboxyl group, and a sulfonic acid group; and
a content ratio of the constituent unit derived from the hydrophilic monomer in the hydrophilic block A is higher than a content ratio of a constituent unit derived from a hydrophilic monomer in the hydrophobic block B.

**5.** The ink set for inkjet textile printing according to claim 4, wherein:

the hydrophobic block B contains a constituent unit derived from a hydrophobic monomer composed of a vinyl-based monomer containing an aromatic ring group or an alicyclic hydrocarbon group; and
a content ratio of the constituent unit derived from the hydrophilic monomer in the hydrophobic block B is less than that of the hydrophilic block A.

**6.** The ink set for inkjet textile printing according to any one of claims 1 to 5, wherein
the aggregating agent contains a polyvalent metal salt, an organic acid, or a compound having a cationic group.

**7.** The ink set for inkjet textile printing according to claim 6, wherein
the aggregating agent contains the compound having the cationic group.

**8.** The ink set for inkjet textile printing according to claim 7, wherein

the compound having the cationic group is a cationic resin.

**9.** The ink set for inkjet textile printing according to any one of claims 1 to 8, wherein the ink further contains a water-dispersible resin different from the block copolymer.

**10.** The ink set for inkjet textile printing according to claim 9, wherein the water-dispersible resin is a urethane resin.

**11.** An image forming method, comprising:

applying, by an inkjet method, an ink onto a fabric to which an aggregating agent adheres, wherein
the ink contains a pigment, a block copolymer, and an aqueous solvent, and
the block copolymer contains two hydrophilic blocks A respectively disposed at both ends of a molecule of the block copolymer and a hydrophobic block B disposed between the two hydrophilic blocks A, the two hydrophilic blocks A interacting or reacting with the aggregating agent.

**12.** An image-formed product, comprising:

a fabric to which an aggregating agent adheres, and an image layer disposed on the fabric, wherein
the image layer contains a pigment and a block copolymer that interacts or reacts with the aggregating agent, and
the block copolymer contains two hydrophilic blocks A respectively disposed at both ends of a molecule of the block copolymer and a hydrophobic block B disposed between the two hydrophilic blocks A, the two hydrophilic blocks A interacting or reacting with the aggregating agent.

## Patentansprüche

**1.** Tintensatz für Tintenstrahltextildruck, umfassend: eine Tinte und eine Vorbehandlungsflüssigkeit, wobei

die Vorbehandlungsflüssigkeit ein Aggregationsmittel enthält,
die Tinte ein Pigment, ein Blockcopolymer und ein wässriges Lösungsmittel enthält, und
das Blockcopolymer zwei hydrophile Blöcke A, die jeweils an beiden Enden eines Moleküls des Blockcopolymers angeordnet sind, und einen hydrophoben Block B enthält, der zwischen den beiden hydrophilen Blöcken A angeordnet ist, wobei die beiden hydrophilen Blöcke A mit dem Aggregationsmittel interagieren oder reagieren.

**2.** Tintensatz für Tintenstrahltextildruck gemäß Anspruch 1, wobei das Blockcopolymer ein Blockcopolymer vom Typ ABA ist, das aus den beiden hydrophilen Blöcken A und dem hydrophoben Block B besteht, der ein einzelner hydrophober Block B ist.

**3.** Tintensatz für Tintenstrahltextildruck gemäß Anspruch 1 oder 2, wobei die beiden hydrophilen Blöcke A Monomer-Zusammensetzungen aufweisen, die identisch zueinander sind.

**4.** Tintensatz für Tintenstrahltextildruck gemäß einem der Ansprüche 1 bis 3, wobei

der hydrophile Block A eine Bestandteileinheit enthält, die von einem hydrophilen Monomer abgeleitet ist, das aus einem Monomer auf Vinylbasis besteht, welches eine hydrophile funktionelle Gruppe enthält, die aus der Gruppe bestehend aus einer Hydroxylgruppe, einer Carboxylgruppe und einer Sulfonsäuregruppe ausgewählt ist; und
ein Gehaltsanteil der aus dem hydrophilen Monomer abgeleiteten Bestandteileinheit im hydrophilen Block A höher ist als ein Gehaltsanteil einer aus einem hydrophilen Monomer abgeleiteten Bestandteileinheit im hydrophoben Block B.

**5.** Tintensatz für Tintenstrahltextildruck gemäß Anspruch 4, wobei

der hydrophobe Block B eine Bestandteileinheit enthält, die von einem hydrophoben Monomer abgeleitet ist, das aus einem Monomer auf Vinylbasis besteht, welches eine aromatische Ringgruppe oder eine alicyclische Kohlenwasserstoffgruppe enthält; und
ein Gehaltsanteil der Bestandteileinheit, die von dem hydrophilen Monomer abgeleitet ist, in dem hydrophoben

Block B geringer ist als der des hydrophilen Blocks A.

6. Tintensatz für Tintenstrahltextildruck gemäß einem der Ansprüche 1 bis 5, wobei das Aggregationsmittel ein mehrwertiges Metallsalz, eine organische Säure oder eine Verbindung mit einer kationischen Gruppe enthält.

7. Tintensatz für Tintenstrahltextildruck gemäß Anspruch 6, wobei das Aggregationsmittel die Verbindung mit der kationischen Gruppe enthält.

8. Tintensatz für Tintenstrahltextildruck gemäß Anspruch 7, wobei die Verbindung mit der kationischen Gruppe ein kationisches Harz ist.

9. Tintensatz für Tintenstrahltextildruck gemäß einem der Ansprüche 1 bis 8, wobei die Tinte ferner ein wasserdispergierbares Harz enthält, das sich von dem Blockcopolymer unterscheidet.

10. Tintensatz für Tintenstrahltextildruck gemäß Anspruch 9, wobei das wasserdispergierbare Harz ein Urethanharz ist.

11. Bildgebungsverfahren, umfassend:

das Aufbringen, mittels eines Tintenstrahlverfahrens, einer Tinte auf ein Textil, an dem ein Aggregationsmittel haftet, wobei
die Tinte ein Pigment, ein Blockcopolymer und ein wässriges Lösungsmittel enthält, und
das Blockcopolymer zwei hydrophile Blöcke A, die jeweils an beiden Enden eines Moleküls des Blockcopolymers angeordnet sind, und einen hydrophoben Block B enthält, der zwischen den beiden hydrophilen Blöcken A angeordnet ist, wobei die beiden hydrophilen Blöcke A mit dem Aggregationsmittel interagieren oder reagieren.

12. Ein bildgeformtes Produkt, umfassend:

ein Textil, an dem ein Aggregationsmittel haftet, und eine auf dem Textil angeordnete Bildschicht, wobei
die Bildschicht ein Pigment und ein Blockcopolymer enthält, das mit dem Aggregationsmittel interagiert oder reagiert, und
das Blockcopolymer zwei hydrophile Blöcke A, die jeweils an beiden Enden eines Moleküls des Blockcopolymers angeordnet sind, und einen hydrophoben Block B enthält, der zwischen den beiden hydrophilen Blöcken A angeordnet ist, wobei die beiden hydrophilen Blöcke A mit dem Aggregationsmittel interagieren oder reagieren.

**Revendications**

1. Ensemble d'encres pour impression textile à jet d'encre, comprenant : une encre et un liquide de prétraitement, dans lequel

le liquide de prétraitement contient un agent d'agrégation,
l'encre contient un pigment, un copolymère bloc et un solvant aqueux, et
le copolymère bloc contient deux blocs hydrophiles A disposés respectivement aux deux extrémités d'une molécule du copolymère bloc et un bloc hydrophobe B disposé entre les deux blocs hydrophiles A, où les deux blocs hydrophiles A interagissent ou réagissent avec l'agent d'agrégation.

2. Ensemble d'encres pour impression textile à jet d'encre selon la revendication 1, dans lequel le copolymère bloc est un copolymère bloc de type ABA composé des deux blocs hydrophiles A et du bloc hydrophobe B qui est un bloc hydrophobe B au nombre d'un.

3. Ensemble d'encres pour impression textile à jet d'encre selon la revendication 1 ou 2, dans lequel les deux blocs hydrophiles A ont des compositions monomères identiques l'une à l'autre.

4. Ensemble d'encres pour impression textile à jet d'encre selon l'une des revendications 1 à 3, dans lequel :

le bloc hydrophile A contient une unité constitutive dérivée d'un monomère hydrophile composé d'un monomère à

base de vinyle contenant un groupe fonctionnel hydrophile choisi parmi le groupe constitué d'un groupe hydroxyle, d'un groupe carboxyle et d'un groupe acide sulfonique ; et
un rapport de teneur de l'unité constitutive dérivée du monomère hydrophile dans le bloc hydrophile A est supérieur à un rapport de teneur d'une unité constitutive dérivée d'un monomère hydrophile dans le bloc hydrophobe B.

**5.** Ensemble d'encres pour impression textile à jet d'encre selon la revendication 4, dans lequel :

le bloc hydrophobe B contient une unité constitutive dérivée d'un monomère hydrophobe composé d'un monomère à base de vinyle contenant un groupe cyclique aromatique ou un groupe hydrocarboné alicyclique ; et
un rapport de teneur de l'unité constitutive dérivée du monomère hydrophile dans le bloc hydrophobe B est inférieur à celui du bloc hydrophile A.

**6.** Ensemble d'encres pour impression textile à jet d'encre selon l'une des revendications 1 à 5, dans lequel l'agent d'agrégation contient un sel métallique polyvalent, un acide organique ou un composé ayant un groupe cationique.

**7.** Ensemble d'encres pour impression textile à jet d'encre selon la revendication 6, dans lequel l'agent d'agrégation contient le composé ayant le groupe cationique.

**8.** Ensemble d'encres pour impression textile à jet d'encre selon la revendication 7, dans lequel le composé ayant le groupe cationique est une résine cationique.

**9.** Ensemble d'encres pour impression textile à jet d'encre selon l'une des revendications 1 à 8, dans lequel l'encre contient en outre une résine dispersible dans l'eau différente du copolymère bloc.

**10.** Ensemble d'encres pour impression textile à jet d'encre selon la revendication 9, dans lequel la résine dispersible dans l'eau est une résine uréthane.

**11.** Procédé de formation d'images, comprenant :

l'application, par un procédé à jet d'encre, d'une encre sur un textile auquel adhère un agent d'agrégation, dans lequel
l'encre contient un pigment, un copolymère bloc et un solvant aqueux, et
le copolymère bloc contient deux blocs hydrophiles A disposés respectivement aux deux extrémités d'une molécule du copolymère bloc et un bloc hydrophobe B disposé entre les deux blocs hydrophiles A, où les deux blocs hydrophiles A interagissent ou réagissent avec l'agent d'agrégation.

**12.** Produit formé à partir d'une image, comprenant :

un textile auquel adhère un agent d'agrégation, et une couche d'image disposée sur le textile, dans lequel
la couche d'image contient un pigment et un copolymère bloc qui interagit ou réagit avec l'agent d'agrégation, et
le copolymère bloc contient deux blocs hydrophiles A disposés respectivement aux deux extrémités d'une molécule du copolymère bloc et un bloc hydrophobe B disposé entre les deux blocs hydrophiles A, où les deux blocs hydrophiles A interagissent ou réagissent avec l'agent d'agrégation.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2023069162 A
- US 2021363691 A
- JP 2008231617 A
- JP 2009298842 A
- JP 2010513672 A
- JP 2009299842 A